(19)

Europäisches Patentamt

European Patent Office

Office européen des brevets

(11) **EP 3 328 082 A1**

(12) **EUROPEAN PATENT APPLICATION**

(43) Date of publication:
30.05.2018 Bulletin 2018/22

(21) Application number: 16306558.4

(22) Date of filing: 25.11.2016

(51) Int Cl.:
$H04N\ 19/147^{(2014.01)}$     $H04N\ 19/124^{(2014.01)}$
$H04N\ 19/19^{(2014.01)}$     $H04N\ 19/119^{(2014.01)}$

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• URBAN, Fabrice
35576 Cesson-Sévigné (FR)

• VIELLARD, Thierry
35576 Cesson-Sévigné (FR)
• LELEANNEC, Fabrice
35576 Cesson-Sévigné (FR)
• GALPIN, Franck
35576 Cesson-Sévigné (FR)
• RACAPE, Fabien
35576 Cesson-Sévigné (FR)
• POIRIER, Tangi
35576 Cesson-Sévigné (FR)

(74) Representative: Huchet, Anne
TECHNICOLOR
1-5, rue Jeanne d'Arc
92130 Issy-les-Moulineaux (FR)

(54) **METHOD AND APPARATUS FOR ENCODING A PICTURE**

(57) A method and an apparatus for encoding a picture are disclosed. A first rate-distortion cost is determined (42) for a current block of said picture when said current block is not split into subblocks, from a distortion computed for each subblock of said current block, said distortion being scaled by an inverse of a lagrangian parameter determined (40) according to a quantization parameter assigned to said subblock. It is then determined (44) whether said current block is split or not according at least to the determined first rate-distortion cost, and the current block is encoded (45) according to the result of determining whether a current block is split or not into subblocks.

```
┌─────────────────────┐
│  Assigning Lagrange │
│    parameters to    │──40
│     assigned QP     │
└─────────────────────┘
           │
           ▼
┌─────────────────────┐
│    Assigning q_0    │──41
└─────────────────────┘
           │
           ▼
┌─────────────────────┐
│  Computing RD cost  │
│   for non-split     │──42
│       block         │
└─────────────────────┘
           │
           ▼
┌─────────────────────┐
│  Computing RD cost  │
│    for split block  │──43
└─────────────────────┘
           │
           ▼
┌─────────────────────┐
│ Determining         │
│  splitting or not   │──44
└─────────────────────┘
           │
           ▼
┌─────────────────────┐
│   Encoding block    │──45
└─────────────────────┘
```

Fig.4

EP 3 328 082 A1

**Description**

1. Technical field

A method and an apparatus for encoding a picture into a bitstream are disclosed.

2. Background

Video encoding methods aims at optimizing the perceived video quality at a given bitrate. In such video encoding schemes, rate-distorsion optimization (RDO) methods are used to achieve a trade-off between a visual quality of a video reconstructed from a video encoded into a bistream and a bitrate of the corresponding bistream.

A video is usually encoded picture-by-picture. For encoding a picture of the video, the picture is subdivided into a set of blocks, and then encoded block-by-block. In an RDO scheme, the quality of the recontructed video is usually assessed by computing the distortion of the reconstructed video at the picture level, or at the block level.

For controlling the trade-off between quality and bitrate of the encoded video, some RDO methods may make use of a set of quantization parameters determined for regions of a picture to encode in a pre-encoding stage.

For instance, in such a pre-encoding stage, a perceptually-driven method divides the picture into fixed-size blocks and assigns a quantization parameter to each block based on an analysis of the content of the picture. Such a method is performed prior to the encoding of the picture, or prior to the encoding of the video. This preliminary steps delivers a set of quantization parameters to be used by the encoder when encoding the current picture.

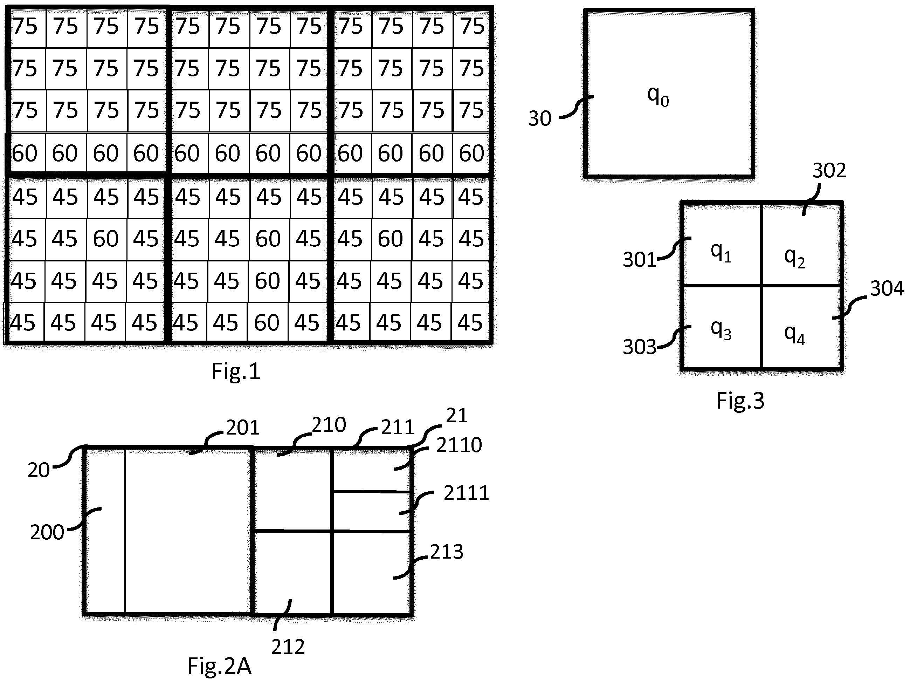

When this preliminary step for determining a quantization parameter assigned to a block of the picture uses a size of block which is smaller than the size of block used by the encoder, the RD optimization method performed at the encoder may not be optimal. For instance, a QP assignement map is illustrated in figure 1, resulting from a preliminary step assigning a quantization parameter (represented by the number in each block of the picture) to small blocks of a picture to encode. For instance, such small blocks have a size of 16x16 pixels. The encoder that performs encoding of the same picture, and thus RD optimization, uses larger blocks, for instance blocks of size 64x64 pixels, as represented with thicker lines in figure 1. From figure 1, it appears that for encoding a larger block, the encoder may have several quantization parameters for each larger block given by the QP assignement map.

Therefore, there is a need for a new video encoding method using a suitable rate-distortion optimization when QP assignement map is provided to an encoder.

3. Summary

A method for encoding a picture is disclosed. Such an encoding method comprises:

- determining a first rate-distortion cost for a current block of said picture when said current block is not split into subblocks, from a distortion computed for each subblock of said current block, said distortion being scaled by an inverse of a lagrangian parameter determined according to a quantization parameter assigned to said subblock,
- determining whether said current block is split or not according at least to the determined first rate-distortion cost,
- encoding the current block according to the result of determining whether a current block is split or not into subblocks.

According to the present principle, the splitting configuration of a block is decided at the encoder by taking into account lagrangian parameters determined according to quantization parameters assigned to the subblocks of the block for computing a rate-distortion cost when the current block is not split. For instance, the quantization parameters of the subblocks may have been assigned to the subblocks in a pre-encoding stage. The present principle allows, in a rate-distortion optimization process applied to a current block, using for each subblock of the current block, a same lagrangian parameter for computing the rate-distortion costs for the current block in the splitting configuration and in the non-splitting configuration. Therefore, the corresponding rate-distortion costs can be validly compared even if different quantization parameters have been assigned to the subblocks of the current block. Thus, the present principle allows improving the prior art rate-distortion optimization, and yielding to better compression efficiency.

According to an embodiment of the present disclosure, determining a first rate-distortion cost for said current block when said current block is not split, comprises:

- assigning to said current block, a quantization parameter being a minimum value of the quantization parameters assigned to the subblocks of the current block,
- computing said first rate-distortion cost using said assigned quantization parameter.

According to this embodiment, the use of a minimum value of quantization parameter tends to penalize more the non-splitting configuration, as a low quantization parameter value tends to increase the coding rate of the current block. Therefore, the splitting configuration is then decided for encoding the current block only when the splitting configuration performs even better than the non-split configuration.

According to another embodiment of the present disclosure, determining a first rate-distortion cost for said current block when said current block is not split, comprises:

- assigning a quantization parameter for said current block from the quantization parameters assigned to the subblocks of the current block, by determining a minimum rate-distortion cost from a set of second rate-distortion costs computed for the current block using the quantization parameters assigned to the subblocks of the current block, when said current block is not split,
- said first rate-distortion cost corresponding to said minimum rate-distortion cost.

According to this embodiment, a best quantization parameter is assigned for the non-splitting configuration of the current block. Thus, rate-distortion optimization performance is thus improved.

According to another embodiment of the present disclosure, if said current block is not split for encoding, encoding the current block comprises quantifying datas for said current block using said assigned quantization parameter.

According to another embodiment of the present disclosure, when it is determined not to split said current block for encoding, encoding said current block comprises updating a quantization parameter map, wherein said quantization parameter map comprises indexes representative of quantization parameters assigned to the subblocks of said picture.

According to this embodiment, when the quantization parameter assigned to a subblock is changed during the rate-distortion optimization process, it is signalled at the decoder by modifying a data map carrying indexes representing the quantization parameters assigned for each subblock.

According to another aspect of the disclosure, an apparatus for encoding a picture is disclosed. Such an encoding apparatus comprises:

- means for determining a first rate-distortion cost for a current block of said picture when said current block is not split into subblocks, from a distortion computed for each subblock of said current block, said distortion being scaled by an inverse of a lagrangian parameter determined according to a quantization parameter assigned to said subblock,
- means for determining whether said current block is split or not according at least to the determined first rate-distortion cost,
- means for encoding the current block according to the result of determining whether a current block is split or not into subblocks.

The present disclosure also provides a computer readable storage medium having stored thereon instructions for encoding a picture according to any one of the embodiments described in the disclosure.

According to one implementation, the different steps of the method for coding a picture as described here above are implemented by one or more software programs or software module programs comprising software instructions intended for execution by a data processor of an apparatus for encoding a picture, these software instructions being designed to command the execution of the different steps of the method according to the present principles.

A computer program is also disclosed that is capable of being executed by a computer or by a data processor, this program comprising instructions to command the execution of the steps of a method for encoding a picture as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc) and is capable of accessing hardware resources of this physical entity (memories, recording media, communications buses, input/output electronic boards, user interfaces, etc).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

4. Brief description of the drawings

Figure 1 illustrates an exemplary QP assignment map to blocks of a picture,
Figure 2A illustrates exemplary blocks partitionning into subblocks,
Figure 2B illustrates a block diagram of an exemplary method for encoding a video according to an embodiment of the present principle,
Figure 3 illustrates an examplary QP assignment and block partitionning,
Figure 4 illustrates a flow diagram of an exemplary method for encoding a picture according to an embodiment of the present principle,
Figure 5 illustrates a flow diagram of an exemplary method for encoding a picture according to another embodiment of the present principle,
Figure 6 illustrates an examplary QP assignment and block partitionning according to an embodiment of the present principle,
Figure 7 illustrates a flow diagram of an exemplary method for encoding a picture according to another embodiment of the present principle,
Figure 8 illustrates an exemplary encoder that may be used in one embodiment of the present principle.

5. Description of embodiments

The principle disclosed herein is described for encoding a picture from a video sequence, however the disclosed principle may be applied to still digital pictures encoding as well.

For encoding, a picture is first subdivided into a set of units of pixels, which will be called blocks for simplicity.

Depending on the video coding standard used, a unit of pixels may be called macroblock (MB) such as in H.264/AVC or a Coding Tree Unit (CTU) such as in HEVC, or a super-block (SB) such as in a VPx encoder.

According to an H.264/AVC encoder, each macroblock comprises a 16x16 block of luminance samples and in the usual case of 4:2:0 color sampling, two corresponding 8x8 blocks of chroma samples. A macroblock of size 16x16 pixels may itself be subdivided into subblocks of size ranging from 8x8 to 4x4 pixels. Encoding of a macroblock may then be performed at the macroblock level or by encoding each subblock of the macroblock individually.

According to an HEVC encoder, a coding tree unit comprises a coding tree block (CTB) of luminance samples and two coding tree blocks of chrominance samples and corresponding syntax elements regarding further subdividing of coding tree blocks. A coding tree block of luminance samples may have a size of 16x16 pixels, 32x32 pixels or 64x64 pixels. Each coding tree block can be further subdivided into smaller blocks (known as coding blocks CB) using a tree structure and quadtree-like signaling. The root of the quadtree is associated with the coding tree unit. The size of the luminance coding tree block is the largest supported size for a luminance coding block. One luminance coding block and ordinarily two chrominance coding blocks form a coding unit (CU). A coding tree unit may contain one coding unit or may be split to form multiple coding units. The luminance and chrominance coding blocks can be further split in size. The HEVC standard supports variable block sizes from 64x64 down to 4x4 samples for prediction.

According to a VP9 encoder, the picture is subdivided into super-blocks of size 64x64 pixels, and each super-block may be divided into smaller blocks in a quad-tree fashion.

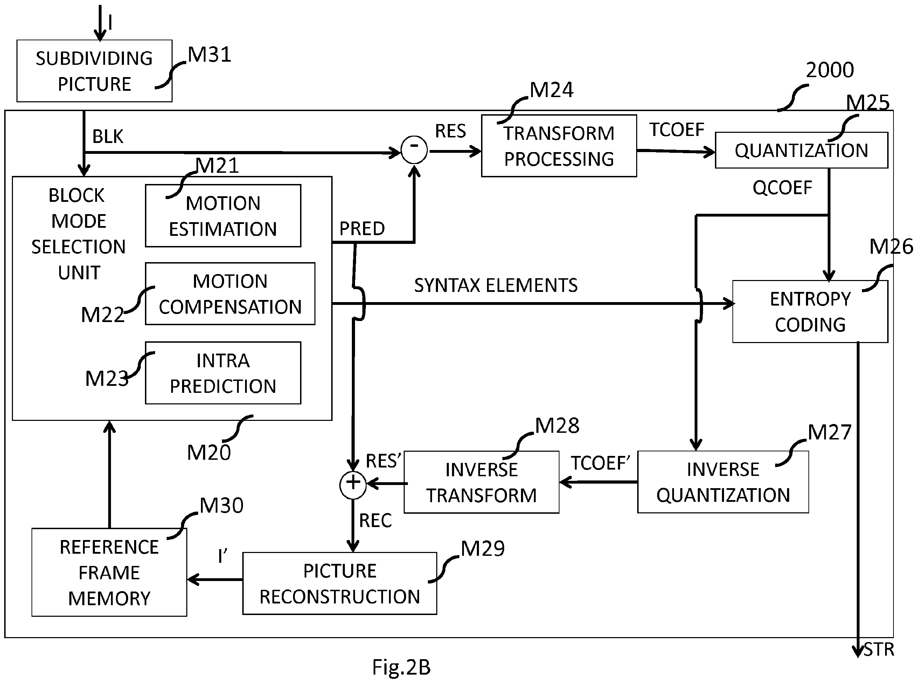

Depending on the video coding standard used, different splitting configuration may be possible. A square block may be split horizontally and/or vertically into 2 or 4 subblocks. Figure 2A illustrates an examplary splitting configuration for two square blocks 20 and 21. The block 21 has been split into 4 square subblocks 210, 211, 212, 213. A square subblocks may be further split horizontally and/or vertically. As shown in figure 2, the subblock 211 has been further split horizontally into 2 subblocks 2110 and 2111.

The vertical or horizontal subblocks issued from a vertical or horizontal splitting may not have a same size. For instance, figure 2A illustrates the vertical splitting of the block 20 into two subblocks 200 and 201, with a vertical splitting line positioned at the first quarter of the horizontal size of the block 20.

The splitting configuration of a block is generally decided by a rate-distortion optimization process when determining a best coding mode for coding the block.

Figure 2B illustrates a block diagram of an exemplary encoder for encoding a video according to an embodiment of the present principle. The video encoder 2000 disclosed here below may be conforming to any video or still picture encoding schemes.

Classically, the video encoder 2000 may include several modules for block-based video encoding, as illustrated in figure 2B. A picture I to be encoded is input to the encoder 2000. The picture I is first subdivided into a set of blocks by a subdividing module (M31). Each block BLK of the picture I is then processed for encoding. Depending on the video coding standard used, a block BLK may correspond to an H.264/AVC macroblock, or an HEVC coding tree unit, or any subblock from one of the units described above, or any other layout of subdivision of picture I.

The encoding process described below is for illustration purposes. According to some embodiments, encoding modules may be added, or removed or may vary from the following modules. However, the principle disclosed herein could still be applied to these variants.

The encoder 2000 performs encoding of each block BLK of the picture I as follows. The encoder 2000 comprises a mode selection unit (M20) for selecting a coding mode for a block BLK of the picture to be coded, e.g. based on a rate/distorsion optimization. Such a mode selection unit comprising:

- a motion estimation module (M21) for estimating motion between one current block of the picture to be coded and reference pictures,
- a motion compensation module (M22) for predicting the current block using the estimated motion,
- an intra prediction module (M23) for spatially predicting the current block.

The mode selection unit (M20) may also decide whether splitting of the block is needed according to rate/distorsion optimization. In that case, the mode selection unit (M20) loops on the subblocks of the block BLK for determining a best coding mode for each one of the subblocks of the block BLK.

The block mode selection unit (M20) performs the encoding of the block for each candidate coding mode for the block BLK and computes a rate-distortion cost for each of these coding modes. The coding mode providing the lowest rate-distortion cost is selected as the best coding mode for the current block BLK. A candidate coding mode may be any coding mode available for coding the block and depends on the video compression standards used. For instance, for an HEVC coder, candidate coding modes may be chosen from one of the 36 intra prediction modes, an inter prediction mode using an estimated motion vector, a merge coding mode deriving motion information from spatial and.or temporal neighbor blocks, etc..

Once a coding mode is selected for the current block BLK or coding modes for subblocks of the current block BLk are selected, the mode selection unit (M20) delivers a predicted block PRED and corresponding syntax elements to be coded in the bitstream for performing the same block prediction at a decoder. When the current block BLK has been split, the predicted block PRED is formed by the set of predicted subblocks delivered by the mode selection unit (M20) for each subblocks.

A residual block RES is then obtained by substracting the predicted block PRED from the original block BLK.

The residual block RES is then transformed by a transform processing module (M24) delivering a transform block TCOEF of transformed coefficients. The transform block TCOEF is then quantized by a quantization module (M25) delivering a quantized transform block QCOEF of quantized residual transform coefficients.

The syntax elements and quantized residual transform coefficients of the block QCOEF are then input to an entropy coding module (M26) to deliver coded data to form the coded bistream STR.

The quantized residual transform coefficients of the quantized transform block QCOEF are processed by an inverse quantization module (M27) delivering a block TCOEF' of unquantized transform coefficients. The block TCOEF' is passed to an inverse transform module (M28) for reconstructing a block of residual prediction RES'.

A reconstucted version REC of the block BLK is then obtained by adding the prediction block PRED to the reconstructed residual prediction block RES'.

The reconstructed block REC is stored in memory for use by a picture recontruction module (M29). The picture reconstruction module (M29) performs reconstruction of a decoded version I' of the picture I from the reconstructed blocks REC. The reconstructed picture I' is then added to a reference picture memory (M30) for later use as a reference picture for encoding the following pictures of the set of pictures to code or for encoding subsequent blocks of the picture I.

When performing the rate-distortion optimization for a block BLK, the block mode selection unit (M20) may estimate the bitrate R of a candidate coding mode by performing all the encoding steps for encoding the block BLK in the candidate coding mode, that is by performing transform, quantization and entropy coding, so as to evaluate the real coding cost and distortion of the reconstructed block. The distortion D of the rate-distortion cost for the block BLK in the candidate coding mode is computed as the distortion between the original block BLK and the reconstructed block REC, for instance using a mean square error. The rate-distortion cost RD for a candidate coding mode is then computed by $RD = D + \lambda \times R$, with $\lambda$ being a lagrange parameter.

When the block BLK can be further split for encoding, the rate-distortion cost associated to the encoding of the block BLK in a splitting configuration, with the best coding modes associated to each subblock of the block BLK should be computed to be compared with the rate-distortion cost of the best coding mode when the block BLK is not split. So, that a decision is made as to whether to split the current block BLK for coding or not. Different splitting configurations may also be compared, such as horizontal splitting, vertical splitting, horizontal and vertical splitting, etc...

In a VP9 encoder, for instance, the rate-distortion optimization process is performed by taking into acount a quantization parameter (QP) assignement map determined during a pre-encoding stage. Such a pre-encoding stage determines quantization parameters QP that should be used when encoding the blocks of the picture I. For instance, a QP assignement map is determined for blocks having a size of 16x16 pixels. Such a QP assignement map may be determined according to spatial activity computed over the 16x16 blocks and classifying the computed spatial activity values. Each class of spatial activity is then associated to a QP parameter.

In the VP9 encoder, the quadtree structure of a 64x64 super-block is decided as follows by the rate-distortion optimization, for a block of the quadtree:

- If the block size is smaller or equal to a 16x16 block of the input QP assignement map, then the block is given the QP from the QP assignement map.
- Otherwise, the QP is decided as a function of the block spatial activity which is recomputed over the whole block surface,
- The rate-distortion cost for the current block is then computed by:

$$Cost_{RD} = D + \lambda(q) \times R$$

Where D is the distortion (L2, i.e. mean square error) of the current block when coded with its coding parameters, R is the associated rate (in number of coding bits) and $\lambda$ is the Lagrange parameter that depends on the block's quantization parameter q. According to the video coding standard used, the Lagrange parameter $\lambda$ is derived from the QP q assigned to the current block.

When deciding the quad-tree structure, the video encoder uses competition between many block sizes by rate-distortion optimization to find the best block partitionning to encode the region overlapped by the blocks of the quad-tree structure. In the context of multiple QP encoding, this competition is done between heterogeneous blocks in terms of QP and Lagrange parameters, as illustrated on figure 3. Figure 3 illustrates a competition for coding a large block 30 as a whole with an assigned QP $q_0$ or in a splitting configuration with 4 subblocks 301, 302, 303, 304 with respective assigned QP $q_1$, $q_2$, $q_3$, and $q_4$. The rate-distortion cost for the block 30 coded as a whole block is $RD_0 = D_0 + \lambda(q_0) \times R_0$, with $D_0$ the distortion computed for the block 30 reconstructed from its coding parameters, $R_0$ the corresponding coding rate and $\lambda(q_0)$ the lagrange parameter associated to the assigned QP. The rate-distortion cost for the block 30 coded as 4 subblocks 301, 302, 303 and 304 is computed by $RD_1 = \sum_{i=1}^{4} D_i + \lambda(q_i) \times R_i$, with $D_i$ the distortion computed for the subblock 30i reconstructed from its coding parameters, $R_i$ the corresponding coding rate and $\lambda(q_i)$ the Lagrange parameter associated to the QP assigned to the subblock 30i. The decision to split the block 30 is made according to the comparison of the coding cost $RD_0$ and $RD_1$. The lowest coding cost is chosen. According to this method, the rate-distortion cost associated to the split mode ($RD_1$) is not correct, because rate distortion costs are mixed althought they are not additive in the case that the $q_i$ of the subblocks are not the same.

Therefore, the rate-distortion optimization process joint to the QP assignement map disclosed above is not optimal.

Therefore, a method for encoding a picture is disclosed. Such an encoding method allows determining a splitting configuration for a current block to be encoded when quantization parameters have already been assigned to subblocks of the current block, for instance, when the quantization parameters have been decided in a pre-encoding stage. The disclosed method determines a rate-distortion cost for the current block when the current block is coded as a whole block, i.e. when the current block is not split, by taking into account the quantization parameters assigned to the subblocks of the current block. The methods disclosed below may be implemented by the mode selection module (M20) disclosed in reference with figure 2B, or may be implemented in any rate-distortion optimization methods wherein a QP assignement map is built in a pre-encoded stage.

It is assumed here that quantization parameters have been assigned to subblocks of the picture to encode in a pre-encoding stage, as illustrated on figure 1, providing a QP map of a the picture. The present principle is disclosed below in the case of an encoding of the QP map according to a VPx encoding video compression schemes. However, the present principle applies to any QP map encoding techniques.

According to the embodiment disclosed here above, the QP map determined for the picture is encoded by encoding a header and a map of index. Such a map of index is similar to the QP map, wherein assigned quantization parameters are replaced by an index. The header carries the data indicating the association of the index to a value of a quantization parameter assigned to a subblock. According to this embodiment, the number of different quantization parameters in the QP map is limited by the number of index coded in the header.

The index map may be used by the encoder to share other parameters for encoding the block of the index map. For instance in a VP9 encoder, the header disclosed above is used for assigning to a given index (also knwon as segment-ID in the VP9 encoder) encoding features to the blocks to which the index has been assigned in the index map. Such encoding features may be for example: restrictions on the reference frames that can be used for each index, coefficients skips, quantization parameter, loop filter strength, transform size options. All the subblocks sharing a same index or segment-ID forms what is commonly known as a segment of the picture.

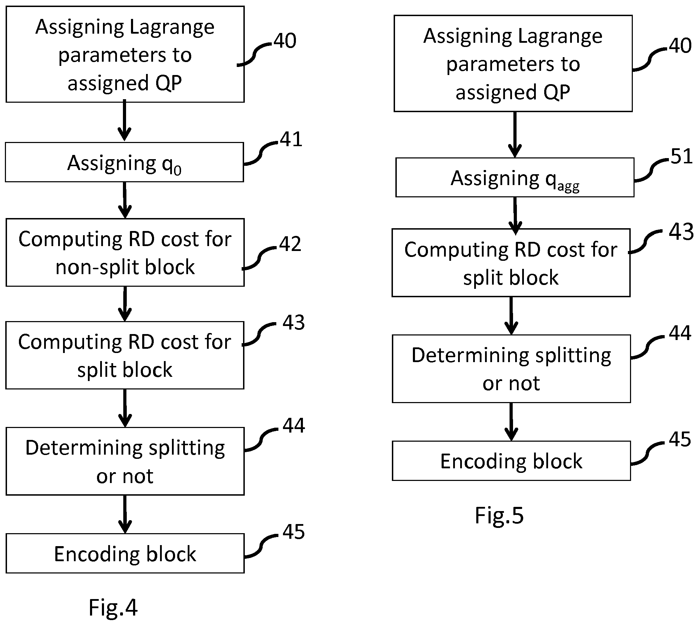

Figure 4 illustrates a flow diagram of an exemplary method for encoding a picture according to an embodiment of the present principle.

In step 40, a priority level is assigned to each segment under the form of a Lagrange parameter as a function of the QP assigned to the segment by:

$$\forall s \in P, \lambda_s = f(q_s), \text{ where P is the picture to encode, s represents a segment in the picture, } q_s \text{ is the quantization parameter assigned to the segment s in the pre-encoding stage and } \lambda_s \text{ is the calculated Lagrange parameter.}$$

The function f depends on the video encoder used, for instance a relationship between the Lagrange parameter and the quantization parameter may be: $\lambda_s = \alpha * 2^{\left(\frac{(q_s-12)}{3}\right)}$, $\alpha$ being a constant set for the video encoder used.

In step 41, when the current block overlaps at least two subblocks to which different quantization parameters have been assigned, a quantization parameter $q_0$ is assigned to the current block 30. Such a quantization parameter $q_0$ is for example a minimum value of the quantization parameters assigned to the subblocks of the current block 30, i.e. $q_0 = min\{q_1, q_2, q_3, q_4\}$ in the example shown in figure 3. That is to say that when determining a best coding mode for the current block in a non-split configuration, the quantization parameter $q_0$ is assigned to the current block for the quantization process.

According to this embodiment, when at least two subblocks overlapped by the current block have different quantization parameters assigned, a single quantization parameter is assigned to the current block for encoding the current block as a whole.

When all the subblocks overlapped by the currrent block have been assigned a same quantization parameter $q_0$, this quantization parameter is assigned to the current block 30.

In step 42, a rate-distortion cost $RD_{non\text{-}split}$ for the current block 30 coded as a whole, i.e. non split, is computed by $RD_{non\text{-}split} = \sum_{i=1}^{4} D_i(q_0) + \lambda_{s(i)} \times R_i(q_0)$, with $D_i(q_0)$ the distortion computed for the subblock 30i reconstructed after encoding and decoding of the current block 30 coded as a whole from the coding parameters of its best coding mode in a non-split configuration and using the quantization parameter $q_0$ assigned to the current block, $R_i(q_0)$ the coding rate corresponding to the encoding of the subblock 30i when encoding the current block 30 in a non-split configuration and using the quantization parameter $q_0$ assigned to the current block, and $\lambda_{s(i)}$ the Lagrange parameter corresponding to the Lagrange parameter assigned to the segment s(i) to which the subblock 30i belongs.

In practice, when encoding the current block 30 in a non-split configuration, the coding rate $R_i(q_0)$ corresponding to the bitrate used for encoding the datas corresponding to the subblock 30i is difficult to assess as it is difficult to distinguish the bit cost associated to each individual subblock when the current block is being encoded in a non-split configuration. This is because for the current block encoded in a non-split configuration, a single large prediction, transform and entropy coding may be applied to the entire current block, overlapping all subblocks comprised in the current block. Therefore, the computation of the rate-distortion cost $RD_{non\text{-}split}$ for the current block 30 in a non-split configuration is modified as follows: $RD_{non\text{-}split} = \sum_{i=1}^{4}(\frac{D_i(q_0)}{\lambda_{s(i)}} + R_i(q_0)) = \left(\sum_{i=1}^{4} \frac{D_i(q_0)}{\lambda_{s(i)}}\right) + R_{SB}(q_0)$, where $R_{SB}(q_0)$ corresponds to the total bits cost for encoding the entire current block 30.

In step 43, a rate-distortion cost $RD_{split}$ for the current block in a splitting configuration is computed as a sum of rate-distortion costs computed for each subblock of the split block 30, (301, 302, 303 and 304), by:

$RD_{split} = \sum_{i=1}^{4} \frac{D_i(q_i)}{\lambda_{s(i)}} + R_i(q_i) = \left(\sum_{i=1}^{4} \frac{D_i(q_i)}{\lambda_{s(i)}}\right) + R_{SB}$, with $D_i(q_i)$ the distortion computed for the subblock 30i reconstructed from the coding parameters of its best coding mode and using the QP $q_i$ assigned to this subblock, $R_i(q_i)$

the coding rate corresponding to the subblock 30i, $\lambda_{s(i)}$ the Lagrange parameter corresponding to the Lagrange parameter assigned to the segment s(i) to which the subblock 30i belongs, $R_{SB}$ corresponding to the total coding cost of the current block 30 when it is coded in a split configuration.

In step 44, splitting or not splitting the current block is determined by comparing the rate-distortion costs $RD_{non-split}$ and $RD_{split}$. If the lowest rate-distortion cost is $RD_{split}$, the current block is split, otherwise the current block is not split.

In step 45, the current block is encoded according to the decision made at step 44 on whether to split or not the current block. The encoding of the current block is performed, for instance, as disclosed in the encoding process disclosed with figure 2B.

Figure 5 illustrates a flow diagram of an exemplary method for encoding a picture according to another embodiment of the present principle. According to this embodiment, the quantization parameter assigned to the current block for encoding the current block in a non-split configuration is determined in an optimal way.

According to this embodiment, steps 40 and 43-45 of figure 5 are similar to steps 40 and 43-45 from figure 4 and are not discussed here.

In step 51, when the current block overlaps at least two subblocks to which different quantization parameters have been assigned, a quantization parameter $q_{agg}$ is assigned to the current block 30.

According to this embodiment, the quantization parameter $q_{agg}$ is determined as being a quantization parameter providing a minimum rate-distortion cost from the rate-distortion costs computed for the current block when said current block is not split, using the quantization parameters q assigned to the subblocks of the current block. That is:

$$q_{agg} = \underset{q \in \{q(s), s \epsilon P\}}{\mathrm{Argmin}} \left( \left( \sum_{i \epsilon SB} \frac{D_i(q)}{\lambda_{s(i)}} \right) + R_{SB}(q) \right),$$ where $q(s)$ is the quantization parameter of the segment s, P being the set of segments of the subblocks overlapped by the current block, SB is the set of subblocks overlapped by the current block, $D_i(q)$ is the distortion computed for the subblock i of the current block when encoding the current block in non-split configuration with quantization parameter q, $\lambda_{s(i)}$ is the Lagrange parameter assigned to the segment $s(i)$ to which the subblock i belongs, $R_{SB}(q)$ is the total bit cost of the current block when encoding the current block in non-split configuration with the quantization parameter q.

According to this embodiment, a best coding mode is searched for encoding the current block is a non-split configuration using each quantization parameter available in the set of subblocks overlapped by the current block. The quantization parameter q providing the lowest coding cost for the current block in a non-split configuration is selected as the quantization parameter $q_{agg}$ for the current block.

According to a variant, the quantization parameter $q_{agg}$ is determined as being a quantization parameter providing a minimum rate-distortion cost from the rate-distortion costs computed for the current block when said current block is not split, using the quantization parameters q assigned to the subblocks of the picture to encode. According to this variant, the quantization parameter is computed in a similar manner as above by

$$q_{agg} = \underset{q \in \{q(s), s \epsilon P\}}{\mathrm{Argmin}} \left( \left( \sum_{i \epsilon SB} \frac{D_i(q)}{\lambda_{s(i)}} \right) + R_{SB}(q) \right)$$ where P here stands for the set of segments of the QP map of the picture to encode.

According to this variant, all the quantization parameters of the QP map are evaluated. According to this embodiment and to any one of the variants disclosed above for determining the quantization parameter $q_{agg}$, the rate-distortion cost $RD_{non-split}$ for the current block in the non-split configuration has already been computed when searching

$q_{agg}$: $RD_{non-split} = \left( \sum_{i \epsilon SB} \frac{D_i(q_{agg})}{\lambda_{s(i)}} \right) + R_{SB}(q_{agg})$. The rate-distortion cost $RD_{non-split}$ is retrieved from the searched if the results have been stored or else recomputed.

The present principle has been described above according to an example wherein a current block comprises 4 subblocks to which quantization parameters have been assigned. The present principle could be applied to a more general example, wherein the current block comprises more or less than 4 subblocks.

More particularly, the principle disclosed above may also be applied for deciding horizontal or vertical splitting of the current block, as well as the splitting of the subblocks of the current block, and to any partitionning such as the one disclosed with figure 2A.

In a general case, the rate-distortion cost computed for a current block is computed by: $J_{SB} =$

$\left( \sum_{i \epsilon SB} \frac{D_i(q_o)}{\lambda_{s(i)}} \right) + R_{SB}$, with SB being the set of subblocks overlapped by the current block, $D_i(q_0)$ the distortion

computed for a subblock i reconstructed from the encoding of the current block in non-split configuration, $q_0$ the quan-

tization parameter assigned to the current block, $\lambda_{s(i)}$ the Lagrange parameter corresponding to the Lagrange parameter assigned to the segment s(i) to which the subblock i belongs, $R_{SB}$ corresponding to the total coding cost of the current block.

The principle disclosed above may be applied in a bottom-to-top block size rate-distortion competition approach that is when subblocks of a current block may be recursively aggregated until the size of the current block.

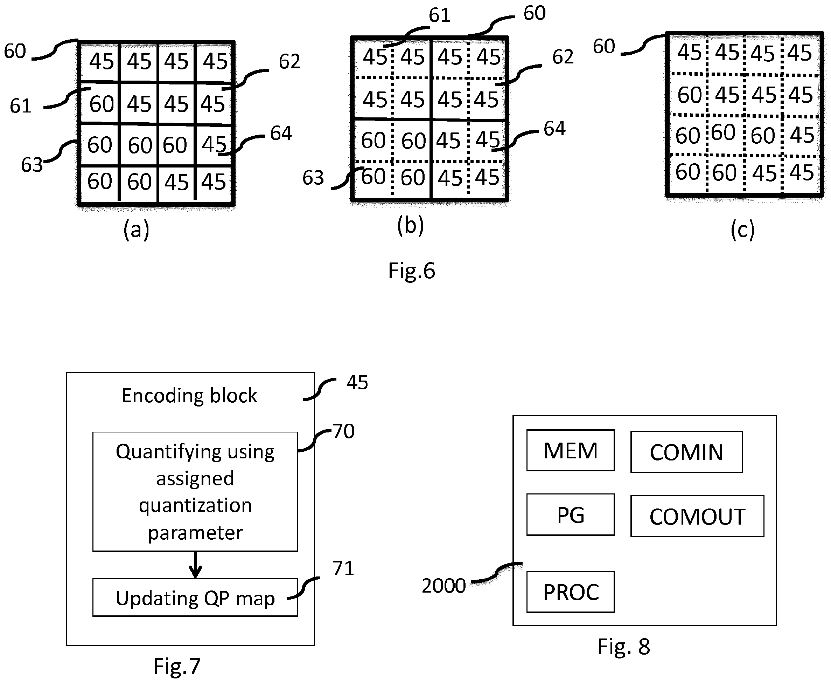

Figure 6 illustrates a large block 60 that may be split into four blocks 61, 62, 63 and 64 (configuration (b) on figure 6). Each block 61, 62, 63 and 64 may be further split into subblocks (configuration (a) on figure 6). The quantization parameters assigned to the subblocks in the pre-encoding stage are indicated on figure 6 (configuration (a)) inside each subblock of the large block 60.

The encoding method disclosed above can thus be applied when performing rate-distortion optimization for determining for each of the blocks 61-64 if the block should be encoded in a split configuration (i.e. by encoding each subblock individually in the given example) or in a non-split configuration.

Configuration (b) of figure 6 illustrates the results in which it has been determined that each block 61-64 should be coded in a non-split configuration. Therefore, according to this example, the configuration (b) of figure 6 illustrates updated quantization parameters for the subblocks, with a same single quantization parameter that has been assigned to the block to which the subblock belongs. This same single quantization parameter may be determined according to any one of the embodiments disclosed above.

The encoding method disclosed above can then be applied when performing rate-distortion optimization for determining for the large block 60 if the large block 60 should be encoded in a split configuration or in a non-split configuration. According to this embodiment, when computing the rate-distortion cost for encoding the large block 60 in a non-split configuration (configuration (c) on figure 6), the rate-distortion cost is computed from the distortion computed for each subblock of the large block using the Lagrange parameter assigned to the initial quantization parameter assigned to the subblock in the pre-encoding stage.

Figure 7 illustrates a flow diagram of an exemplary method for encoding a picture according to another embodiment of the present principle. According to this embodiment, the decisions for encoding the current block have been performed according to any one of the embodiments disclosed above in relation with figures 4 or 5. The steps disclosed below may be implemented in the encoder disclosed in relation with figure 2B.

According to the embodiment disclosed below, at step 45, if it has been determined that the current block is encoded in a non-split configuration, when quantifying datas of the current block, for instance by the quantization module (M25) from figure 2B, in step 70, the quantization parameter $q_0$ assigned to the current block is used for quantifying datas.

In step 71, the QP map of the picture to encode is updated before being encoding. For the subblocks overlapped by a current block that is to be encoded in a non-split configuration, the quantization parameters of these subblocks are updated with the quantization parameter $q_0$ assigned to the current block. In the index map representative of the indexes of the QP map for the picture to encode, the index of the subblocks belonging to the current block are updated with the index corresponding to the quantization parameter $q_0$ assigned to the current block. In that way, when decoding the picture, a decoder could use a same quantization parameter as the one used for encoding the current block. The index map is then encoded a classical way, by the entropy coding module (M26) of figure 2B for instance.

Figure 8 illustrates the simplified structure of an apparatus (2000) for encoding a picture according to an embodiment of the present principle. Such an apparatus 2000 is configured to implement the method for encoding a picture according to the present principle according to any embodiments disclosed above. The functional units of the encoder apparatus 2000 have been disclosed in reference to figure 2B. The structural apparatus 2000 disclosed below may be configured to implement each of these functional units individually or in combination, and according to any one of the embodiments of the principle disclosed above in reference with figures 4-7.

According to an embodiment, the encoder apparatus 2000 comprises a processing unit PROC equipped for example with a processor and driven by a computer program PG stored in a memory MEM and implementing the method for encoding a picture according to the present principle.

At initialization, the code instructions of the computer program PG are for example loaded into a RAM (not shown) and then executed by the processor of the processing unit PROC. The processor of the processing unit PROC implements the steps of the method for encoding a picture which has been described here above, according to the instructions of the computer program PG.

The encoder apparatus 2000 comprises a communication unit COMOUT to transmit an encoded bitstream STR to a data network.

The encoder apparatus 2000 also comprises an interface COMIN for receiving a picture or a video to encode.

**Claims**

1. A method for encoding a picture, comprising:

- determining (42) a first rate-distortion cost for a current block of said picture when said current block is not split into subblocks, from a distortion computed for each subblock of said current block, said distortion being scaled by an inverse of a lagrangian parameter determined (40) according to a quantization parameter assigned to said subblock,
- determining (44) whether said current block is split or not according at least to the determined first rate-distortion cost,
- encoding (45) the current block according to the result of determining whether a current block is split or not into subblocks.

2. The method according to claim 1, wherein determining a first rate-distortion cost for said current block when said current block is not split, comprises:

- assigning to said current block, a quantization parameter being a minimum value of the quantization parameters assigned to the subblocks of the current block,
- computing said first rate-distortion cost using said assigned quantization parameter.

3. The method according to claim 1, wherein determining a first rate-distortion cost for said current block when said current block is not split, comprises:

- assigning a quantization parameter for said current block from the quantization parameters assigned to the subblocks of the current block, by determining a minimum rate-distortion cost from a set of second rate-distortion costs computed for the current block when said current block is not split, using the quantization parameters assigned to the subblocks of the current block,
- said first rate-distortion cost corresponding to said minimum rate-distortion cost.

4. The method according to any one of claims 2 or 3, wherein if said current block is not split for encoding, encoding the current block comprises quantifying datas for said current block using said assigned quantization parameter.

5. The method according to any one of claims 2 to 4, wherein when it is determined not to split said current block for encoding, encoding said current block comprises updating a quantization parameter map, wherein said quantization parameter map comprises indexes representative of quantization parameters assigned to the subblocks of said picture.

6. An apparatus for encoding a picture, comprising:

- means for determining a first rate-distortion cost for a current block of said picture when said current block is not split into subblocks, from a distortion computed for each subblock of said current block, said distortion being scaled by an inverse of a lagrangian parameter determined according to a quantization parameter assigned to said subblock,
- means for determining whether said current block is split or not according at least to the determined first rate-distortion cost,
- means for encoding the current block according to the result of determining whether a current block is split or not into subblocks.

7. A computer program comprising software code instructions for performing the method according to any one of claims 1 to 5, when the computer program is executed by a processor.

EP 3 328 082 A1

| 75 | 75 | 75 | 75 | 75 | 75 | 75 | 75 | 75 | 75 | 75 | 75 |
|----|----|----|----|----|----|----|----|----|----|----|----|
| 75 | 75 | 75 | 75 | 75 | 75 | 75 | 75 | 75 | 75 | 75 | 75 |
| 75 | 75 | 75 | 75 | 75 | 75 | 75 | 75 | 75 | 75 | 75 | 75 |
| 60 | 60 | 60 | 60 | 60 | 60 | 60 | 60 | 60 | 60 | 60 | 60 |
| 45 | 45 | 45 | 45 | 45 | 45 | 45 | 45 | 45 | 45 | 45 | 45 |
| 45 | 45 | 60 | 45 | 45 | 45 | 60 | 45 | 45 | 60 | 45 | 45 |
| 45 | 45 | 45 | 45 | 45 | 45 | 60 | 45 | 45 | 45 | 45 | 45 |
| 45 | 45 | 45 | 45 | 45 | 45 | 60 | 45 | 45 | 45 | 45 | 45 |

Fig.1

$q_0$

30

Fig.2A

20, 200, 201, 210, 211, 21, 2110, 2111, 213, 212

301 $q_1$, 302 $q_2$, 303 $q_3$, 304 $q_4$

Fig.3

Fig.2B

EP 3 328 082 A1

```
┌─────────────────────┐
│  Assigning Lagrange │
│   parameters to     │╮─40
│   assigned QP       │
└─────────────────────┘
          │
          ▼
┌─────────────────────┐
│                     │╮─41
│   Assigning q₀      │
└─────────────────────┘
          │
          ▼
┌─────────────────────┐
│  Computing RD cost  │
│   for               │╮─42
│   non-split block   │
└─────────────────────┘
          │
          ▼
┌─────────────────────┐
│  Computing RD cost  │
│   for               │╮─43
│   split block       │
└─────────────────────┘
          │
          ▼
┌─────────────────────┐
│  Determining        │
│   splitting         │╮─44
│   or not            │
└─────────────────────┘
          │
          ▼
┌─────────────────────┐
│                     │╮─45
│   Encoding block    │
└─────────────────────┘
```

Fig.4

```
┌─────────────────────┐
│  Assigning Lagrange │
│   parameters to     │╮─40
│   assigned QP       │
└─────────────────────┘
          │
          ▼
┌─────────────────────┐
│                     │╮─51
│  Assigning q_agg    │
└─────────────────────┘
          │
          ▼
┌─────────────────────┐
│  Computing RD cost  │
│   for               │╮─43
│   split block       │
└─────────────────────┘
          │
          ▼
┌─────────────────────┐
│  Determining        │
│   splitting         │╮─44
│   or not            │
└─────────────────────┘
          │
          ▼
┌─────────────────────┐
│                     │╮─45
│   Encoding block    │
└─────────────────────┘
```

Fig.5

(a)          (b)          (c)

Fig.6

**Encoding block** 45

Quantifying using assigned quantization parameter 70

Updating QP map 71

Fig.7

| MEM | COMIN |
| PG | COMOUT |
| PROC | |

2000

Fig. 8

EP 3 328 082 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 501 115 A (CANON KK [JP]) 16 October 2013 (2013-10-16) * abstract * * page 5, lines 6-34 * * page 6, lines 17-31 * * page 26, line 18 - page 27, line 25 * * page 31, line 18 - page 36, line 25 * * figures 14-15 * ----- | 1-7 | INV. H04N19/147 H04N19/124 H04N19/19 H04N19/119 |
| A | US 2014/254670 A1 (KWON NYEONG-KYU [KR] ET AL) 11 September 2014 (2014-09-11) * abstract * * paragraphs [0007] - [0010], [0057] - [0096] * * figures 2, 4-6 * ----- | 1-7 | |
| A | WANG SHANSHE ET AL: "Low complexity encoder optimization for HEVC", JOURNAL OF VISUAL COMMUNICATION AND IMAGE REPRESENTATION, ACADEMIC PRESS, INC, US, vol. 35, 17 December 2015 (2015-12-17), pages 120-131, XP029395062, ISSN: 1047-3203, DOI: 10.1016/J.JVCIR.2015.12.005 * abstract * * sections 1, 2.2 and 4.1 * * figure 8 * ----- | 1-7 | TECHNICAL FIELDS SEARCHED (IPC) H04N |

The present search report has been drawn up for all claims

| Place of search | Date of completion of the search | Examiner |
|---|---|---|
| The Hague | 30 May 2017 | Mayer, Claudia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6558

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2017

| Patent document cited in search report | | Publication date | Patent family member(s) | | Publication date |
|---|---|---|---|---|---|
| GB 2501115 | A | 16-10-2013 | GB | 2501115 A | 16-10-2013 |
| | | | GB | 2501139 A | 16-10-2013 |
| | | | GB | 2501147 A | 16-10-2013 |
| | | | US | 2013272621 A1 | 17-10-2013 |
| US 2014254670 | A1 | 11-09-2014 | KR | 20140111139 A | 18-09-2014 |
| | | | US | 2014254670 A1 | 11-09-2014 |

EPO FORM P0459

For more details about this annex : see Official Journal of the European Patent Office, No. 12/82